# EUROPEAN PATENT SPECIFICATION

(11) **EP 1 393 525 B1**
(45) Date of publication and mention of the grant of the patent: **20.12.2006**
(21) Application number: 02741163.6
(22) Date of filing: 30.05.2002
(51) Int. Cl.: H04L 29/06

(54) **METHOD FOR TRANSMITTING AN INFORMATION STREAM, CORRESPONDING TRANSMISSION SYSTEM, TRANSMITTER AND COMPUTER PRODUCT**
VERFAHREN ZUR ÜBERTRAGUNG EINES INFORMATIONSTROMES, SOWIE ÜBERTRAGUNGSYSTEM, SENDER UND COMPUTER PRODUKT ZUR AUSFÜHRUNG DAVON
PROCEDE DE TRANSMISSION DE FLUX D'INFORMATION, SYSTEME DE TRANSMISSION CORRESPONDANT, RECEPTEUR ET PRODUIT INFORMATIQUE

(30) Priority: 01.06.2001 IT TO20010052
(43) Date of publication of application: 03.03.2004
(73) Proprietor: Telecom Italia S.p.A., 20123 Milano (IT)
(72) Inventor: FRANCESCHINI, Guido, TELECOM ITALIA S.P.A., I-10148 Torino (IT); QUAGLIA, Mauro, TELECOM ITALIA S.P.A., I-10148 Torino (IT); VARESIO, Andrea, TELECOM ITALIA S.P.A., I-10148 Torino (IT)
(74) Representative: Giannesi, Pier Giovanni
(86) International application number: PCT/IT2002/000346
(87) International publication number: WO 2002/098102

(56) References cited:
- US-A- 5 533 021
- US-A- 5 598 415
- SARGINSON P A: "MPEG-2: A TUTORIAL INTRODUCTION TO THE SYSTEMS LAYER" IEE COLLOQUIUM ON MPEG WHAT IT IS AND WHAT IT ISN'T, IEE, LONDON, GB, 1995, pages 4-1-4-13, XP000560804

## Description

### Technical Field

The present invention relates to transmission techniques and it was developed with particular attention to its possible application to audio-visual or multimedia communication systems.

The invention tackles the problem of the possible allocation over multiple communication channels of data streams such as audio and video streams to be presented in synchronised fashion to the receiving terminal. The invention is especially aimed at meeting the requirement of transmitting information streams of this nature on a certain number of communication channels of a communication network (such as a packet switched network and/or a mobile communication network) under conditions in which, the transmission capacity of the individual communication channel not being sufficient to meet the transmission requirements, it is necessary to provide for transmission over multiple communication channels, under conditions in which the number of the aforesaid communication channels can also vary over time according to transmission requirements.

### Background Art

Methods are known in the prior art which allow to associate information to each packet that transports multimedia data: reference can be made, for instance, to the RTP header (IETF RFC 1889), to the header PES (ISO/IEC 13818-1) or else to the header SL (ISO/IEC 14496-1). In particular, the last header mentioned allows a high degree of configurability and hence enables to optimise bit consumption in the various cases.

Also known are solutions that allow to multiplex different data streams: again, by way of example, reference can be made to the solution known as MPEG-4 Flexmux (ISO/IEC 14496-1), which uses a header containing eight bits to identify the data stream and eight bits to indicate the length of the packet.

Other, well known and widespread used solutions, are known, for example, from US 5,598,415 and SARGINSON P A: 'MPEG-2: A TUTORIAL INTRODUCTION TO THE SYSTEMS LAYER' IEE COLLOQUIUM ON MPEG WHAT IT ISN'T, IEE, LONDON, GB, 1995, pages 4/1-4/13.

The above solutions diclose, in particular, methods for aggregating audio, video, data and associated meta-information in a single bit stream and transmitting the single bit stream over a single communication channel.

None of the above documents teaches how to tranmit the single bit stream over a plurality of communication channels.

Lastly, at least for particular applications, solutions are known that allow to allocate a sequence of packets over multiple transmission channels: a technique of this kind is used in some cases to manage transmission on two ISDN B channels.

The direct application of such solutions to the context outlined above, however, can hardly be proposed: the quantity of control information necessary to assure the correct aggregation of the information stream in transmission and a corresponding accurate de-aggregation in reception (the terms "aggregation" and "de-aggregation" are used herein with their most general meaning) would end up having a significant percent weight relative to the useful information (payload) that is transmitted. All with an extremely inefficient use of available transmission resources, already reduced if referred to the streams to be transmitted.

### Disclosure of the Invention

The aim of the present invention is to provide an enhanced solution with respect to the solutions of the prior art, especially in regard to the exploitation of the bandwidth available for transmission.

According to the present invention, said aim is achieved thanks to a transmission method having the characteristics specifically set out in the claims that follow. The invention also refers to the related system, to the transmitter and to the receiver that correspond thereto, as well as to the corresponding computer product, i.e. to the product that can be directly loaded in the memory of a computer and comprising portions of software code that allow to implement the method according to the invention when the aforesaid product is run on a computer.

The solution according to the invention allows to group and adequately protect the information regarding the description of the transmitted data, the mechanism for multiplexing the different flows and the mechanism for allocating on multiple transmission or communication channels, all minimising the quantities of bit required in addition to the useful stream (payload) that is transmitted.

The invention can be used with particular advantage to transmit, in real time, audio and/or video signals (possibly accompanied by data signals) on telephone lines, such as lines of a mobile telecommunication network, such as a cellular network.

The reference to said context of application, however, must not be construed to limit the field of possible application of the invention, which is quite general.

### Brief Description of Drawings

The invention will now be described, purely by way of non limiting example, with reference to the accompanying drawings, in which:
- Figure **1** shows, in the form of a functional block diagram, the operation of a system according to the invention, considered from the transmission side, and
- Figure **2** shows, in the form of a functional block diagram, the operation of a system according to the invention, considered from the reception side.

### Best mode for Carrying Out the Invention

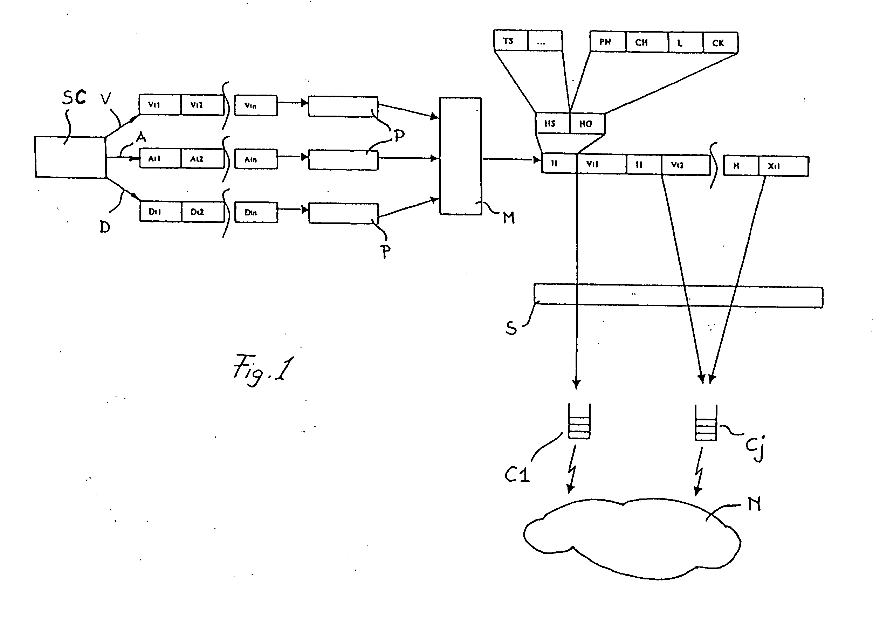

In the diagram of Figure 1, the reference number SC generally indicates a source of video V, audio A and/or data D information streams that are presupposed to be assembled in access units of variable size, each associated to a certain corresponding meta-information.

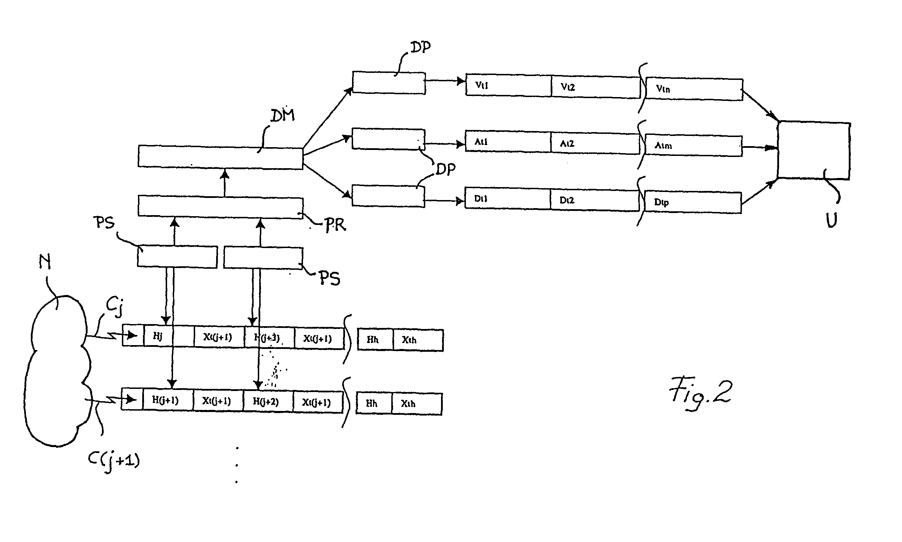

The meta-information includes, in particular, a so-called "time stamp" indicating the time instant whereto the access unit is referred (for instance the instance when a video frame is captured), measured in relation to a time reference system that is assumed to be known both to the source S and to a user or recipient U (Figure 2) of the streams in question.

For instance, in the top left part of Figure 1 the various access units comprising the video signal V are indicated as Vt1, Vt2, ..., Vtn. Similarly, the access units of the audio stream A are indicated as At1, At2, ..., Atn, whilst the homologous units of the data flows D are indicated as Dt1, Dt2,..., Dtn. The letters V, A and D identify the nature of the individual information stream (video, audio, data), whilst tn (n= 1,.. n) indicates the time of capture of the corresponding access unit.

The figures of the drawings refer to the presence of three information streams V, A and D. It is nonetheless evident that the present invention can also advantageously be applied in contexts in which, for instance:
- only some of the streams V, A, D considered previously are present, and/or
- multiple streams of the same type are present, i.e., for instance, multiple video streams, multiple audio streams, etc..

All in any possible combination.

The various access units Vtn, Atn, Dtn are provided to respective packetiser modules P that organise (according to criteria that are known in themselves) the stream of the access units into packets of appropriate dimensions in view of transmission.

Each packet contains at least a segment of access unit, i.e. a segment of access unit, a whole access unit, or yet again a certain number of whole access units.

Each packet is composed by a payload as well as a respective header.

All in view of the aggregation of the various information streams V, A, D into an overall aggregate stream deriving from the aggregating action performed by a module M with multiplexer (mux) function. The aggregate stream is then distributed on a certain number of communication channels Cj (with j=1, ..., n: the communication channel can thus be - at least under certain condition - only one) of a transmission network N, such as a cellular mobile communication network.

The allocating operation on the communication channels in question is achieved by means of a subdivision or splitter module S that operates according to the specific transmission requirements (for instance, according to the number of communication channels used at the moment for transmission).

The operating criteria of the multiplexer module M and of the splitter module S are to be considered widely known in the art and such as not to require a detailed description herein, also because such criteria are not relevant, in themselves, for purposes of understanding and implementing the present invention.

As is better illustrated in the top right part of Figure 1, the individual header associated to the various access units of the streams V, A and D groups two types of fields.

A first set of fields of the header H (set indicated as HS) conveys information specifically configured for the individual stream and which represent the meta-information associated to the transmitted data.

A second set of fields of the header H (set indicated as HG) instead comprises general validity fields, which do not depend on the individual stream, including at least a parity bit (checksum).

It will be noted that, for the sake of illustrative simplicity, the aforesaid sets of fields HS and HG are shown in the figures to be mutually contiguous. Actually, the fields of the two sets in question are usually mutually "mixed", said solution being preferred, in fact, for example due to parsing requirements upon reception.

Persons skilled in the art will appreciate that the technique for representing the meta-information associated to the individual access unit is taken from the specification of the SL header (ISO/IEC 14496-1), since said specification allows to minimise bit consumption in each header and at the same time is configurable and hence allows for a considerable degree of flexibility.

The specification ISO/IEC 14496-1 provides a precise mechanism for configuring the header SL: this mechanism consists of the preventive transmission of a structure called SLConfigDescriptor which establishes, for instance, how many bits are to be used to represent a time stamp, and in what scale.

In the solution according to the invention a structure like SLConfigDescriptor can be transmitted preventively, but also be pre-set on the terminals. In any case additional configuration parameters are added to said SLConfigDescriptor in order to handle the case of multiple access units in a single packet.

The technique used in this case is similar to the one defined for the packetisation of MPEG-4 streams on RTP (current reference: IETF draft-gentric-avt-mpeg4-multiSL-04.txt).

Overall, the set of fields used for conveying into the header H the meta-information of the access units composes the header part called HS herein. Each individual stream in general needs its own configuration relating to the header HS since the configuration parameters can be different for each stream.

As stated previously, in addition to the fields of the set HS, the header contains further information, globally indicated as HG, destined to allow the subdivision of the transported stream on the different communication channels or lines and the correct re-assembly at the receiver.

In particular, in the embodiment illustrated herein, the set of additional information HG comprises the following fields:
- PN: number of the packet in the order it was sent on the transmission system,
- CH: channel or stream identifier; each channel carries a particular stream (video, audio or data),
- L: length of the data packet,
- CK: protection checksum for all the data of the header (thus, both of the HS part and of the HG part), except for CK itself.

In a preferred manner, the field CH with the channel or stream identifier is situated in a front position of the header H, to precede the set HS, for obvious parsing requirements in reception.

The size (number of bits) used for the various fields of the header HG is determined in such a way as to obtain the best compromise between the reduction of the overhead introduced by the generation of the header and the performance required from the system.

The configuration of the part of header HG cannot be established at run-time (as can be hypothesised for the part HS), but instead represents a constraint for the transmitter-receiver system.

The assignment of different channel or stream identifiers CH available to the various video, audio and data streams can be pre-set or be established at run-time; in the latter case, however, it is necessary to reserve a channel identifier for the assignment.

In the definition of the data that comprise the two sets of fields of the header H, it is necessary to take into account some intrinsic factors linked to the general characteristics of the transmission system.

For example, the length of the time stamp field in HS determines the wrap-around time of the time stamp.

Similarly, the maximum value of the field PN in HG determines the maximum difference in travel time allowed between available lines or communication channels.

The length of the field CH determines the maximum number of streams that can be supported at the same time and, similarly, the maximum value of L corresponds to the maximum length of the packet.

Lastly, the length of the field CK determines the error detection/correction capacity for the headers.

Packets are generated with variable length, in particular with a maximum size that allows to balance with a certain precision the distribution of the data on the multiplicity of available communication channels. The packets thereby generated are distributed by the splitter module S on the various communication channels C1, ..., Cj respecting a criterion of homogeneous distribution of the load among the different communication channels or lines.

Each generated packet is sent on a determined communication channel or line. Excessively long packets could generate an unbalance in the load of the communication channels or lines; therefore, the access units whose length exceeds the maximum packet size are fragmented over multiple packets.

The field CH is used during the reception phase for the reconstruction of the various streams of access units V, A and D.

The packet number field PN is destined to allow to reconstruct, during the reception phase, the correct sequence of the packets, thereby overcoming the possible difference in travel time over the transmission network N which may exist among the different communication channels.

The time stamp and the different other fields of the set HS are destined to allow to reconstruct, during the reception phase, the exact contours of the access units and the meta-information associated thereto, allowing their correct management (for instance, the synchronised reproduction of audio and video).

Examining the structure of the receiver as shown in Figure 2, it will be noted that the packetised data incoming from the network N on the various communication channels Cj, ... C(j+1) are subjected to a series of analysis, reorganisation and buffering operations destined to reconstruct the sequence of access units originally transmitted, maintaining the meta-information that characterise them.

The data received on each individual communication channel do not expose, in reception, the borders of the individual packets transmitted, but constitute a continuous stream of bytes.

The first step that is executed in the receiver consists, therefore, of analysing the incoming stream of bytes and of identifying the borders of the different packets.

This occurs through modules PS that search the packets analysing the incoming stream of bytes on each communication channel, seeking a sequence of at least two syntactically correct headers.

In particular, the modules PS try to decode a header (H1) starting from a certain byte in the stream and to verify whether the checksum CK is correct. If so, the modules PS then analyse the next header (H2) which should be located at a distance L (just obtained from the corresponding field of the part HG of H1). If H2 is also found to have a correct checksum CK, the modules PS verify the subsequent headers H3, H4, etc.

The number of headers to be checked can be set selectively.

If the check fails, the modules PS repeat the same type of calculation starting from the byte immediately following the one considered previously, and so on until the frame of the packets is identified.

The modules PS perform a parsing function directed to the interpretation and recognition of the various fields of the headers H.

The packets thus identified by the modules PS are sent to a module PR that re-sorts the packets coming from the different communication channels, using the conveyed information of the fields PN.

This takes place through a comparison between the head packets in the various active queues. The correct sequence of the packets is thus reconstructed in a manner that is independent from the time of travel that the various packets may have undergone during the delivery.

The third processing step carried out within the receiver provides for a de-multiplexer module DM to allocate (according to the content of the fields CH) the overall aggregate or information stream received into a plurality of streams forwarded to an array of de-packetiser modules DP, each tasked with de-packetising a respective information stream.

Each of the de-packetisers DP extracts from each resorted packet of the respective information stream (V, A or D) the actual payload and the meta-information associated thereto (conveyed through the part of header HS). Each module PS therefore generates at its output the sequence of the video (Vtn), audio (Atn) or data (Dtn) access units whereon it has cognisance. All in view of the subsequent processing of the respective data, carried out according to known criteria.

Naturally, the principle of the operation holding true, the construction details and the embodiments can be widely varied with respect to what is described and illustrated herein, without thereby departing from the scope of the present invention.

## Claims

1. Method of transmitting on a plurality of telephone lines (Cj) at least an information stream (V, A, D) assembled in access units (Vtn, Atn, Dtn) with associated respective meta-information, wherein for the transmission on said plurality of telephone lines (Cj) said at least one information stream (V, A, D) is arranged in packets, each packet comprising at least a segment of one of said access units (Vtn, Atn, Dtn) of said at least one information stream (V, A, D) and a header (H); said header (H) comprising:
- a first set of fields (HS), which represents the meta-information associated to said at least one segment of said access unit (Vtn, Atn, Dtn) of said at least one information stream (V, A, D), and
- a second set of fields (HG) for allowing the subdivision of the at least one information stream on the plurality of telephone lines (Cj), wherein said second set of fields (HG) comprises general validity fields, independent from said at least one information stream (V, A, D) and including at least a packet number field (PN) comprising the number of the packet in the order of sending in transmission
and wherein
(i) the maximum size of said packets is controlled and
(ii) said packets are distributed (S) on said telephone lines
so as to respect a homogeneous distribution of the load among the different telephone lines (Cj).

2. Method as claimed in claim 1, **characterised in that** said access units (Vtn, Atn, Dtn) have variable size.

3. Method as claimed in claim 1 or claim 2, **characterised in that** said at least one information stream is selected within the group constituted by a video information stream (V), an audio information stream (A), and a data information stream (D).

4. Method as claimed in any of the previous claims, **characterised in that** said access units (Vtn, Atn, Dtn) relate to mutually different information streams.

5. Method as claimed in any of the previous claims, **characterised in that** said second set (HG) of fields of said header (H) comprises at least a field selected within the group constituted by the following fields:
- identifier of the transmission channel (CH),
- length of the data packet(L),
- check (checksum - CK).

6. Method according to claims 1 to 4 **characterised in that** said second set (HG) of fields of said header (H) further comprises all the following fields
- identifier of the transmission channel (CH),
- length of the data packet(L),
- check (checksum - CK).

7. Method as claimed in claim 5 or claim 6, **characterised in that** said identifier field of the transmission channel (CH) is situated, within said header (H), in a position preceding said first set of fields (HS).

8. Method as claimed in any of the claims 5 through 7, **characterised in that** said check field (CK) relates to data included both in said first set (HS) and in said second set (HG) of fields of said header (H).

9. Method as claimed in any of the claims 5 through 7, **characterised in that** said check field (CK) relates to data included both in said first set (HS) and in said second set (HG) of fields of said header (H) except the check field (CK) itself.

10. Method as claimed in any of the claims 5 through 9, **characterised in that** said check field (CK) is a parity check or checksum field.

11. Method as claimed in any of the claims 1 through 10, **characterised in that** said first set (HS) of fields of said header (H) comprises a time stamp field (TS).

12. Transmission system comprising means for carrying out the steps of any one of method claims 1 through 11.

13. Transmitter for a transmission system operating with the method as claimed in any of the claims 1 a 11, **characterised in that** it comprises:
- a multiplexer (M) for generating said information stream starting from said access units (Vtn, Atn, Dtn), and
- a splitter module (S) for distributing said information stream on said plurality of telephone lines (Cj).

14. Computer product able to be loaded in the memory of a computer, comprising portions of software code for implementing the method as claimed in any of the claims 1 through 11 when said product is made to run on a computer.

## Patentansprüche

1. Verfahren zum Übertragen wenigstens eines Informationsstromes (V, A, D), der aus Zugriffseinheiten (Vtn, Atn, Dtn) mit jeweils zugeordneter Metainformation zusammengesetzt ist, auf mehreren Telefonleitungen (Cⱼ), wobei der wenigstens eine Informationsstrom (V, A, D) zur Übertragung auf den mehreren Telefonleitungen (Cⱼ) in Paketen zusammengestellt wird, wobei jedes Paket wenigstens ein Segment einer der Zugriffseinheiten (Vtn, Atn, Dtn) des wenigstens einen Informationsstromes (V, A, D) und einen Header (H) umfaßt;
wobei der Header (H) umfaßt:
- eine erste Gruppe von Feldern (HS), welche die dem wenigsten einen Segment der Zugriffseinheit (Vtn, Atn, Dtn) des wenigstens einen Informationsstromes (V, A, D) zugeordnete Metainformation darstellt, und
- eine zweite Gruppe von Feldern (HG) zum Ermöglichen des Aufteilens des wenigstens einen Informationsstromes auf die mehreren Telefonleitungen (Cⱼ), wobei die zweite Gruppe von Feldern (HG) allgemeine Gültigkeitsfelder umfaßt, die unabhängig von dem wenigstens einen Informationsstrom (V, A, D) sind und wenigstens ein Paketnummernfeld (PN) umfassen, welches die Nummer des Pakets in der Sendereihenfolge beim Übertragen umfaßt
und wobei
(i) die maximale Größe der Pakete kontrolliert wird, und
(ii) die Pakete auf die Telefonleitungen verteilt werden (S),
so daß eine homogene Verteilung der Last auf die verschiedenen Telefonleitungen (Cⱼ) eingehalten wird.

2. Verfahren nach Anspruch 1, **dadurch gekennzeichnet, daß** die Zugriffseinheiten (Vtn, Atn, Dtn) eine variable Größe aufweisen.

3. Verfahren nach Anspruch 1 oder 2, **dadurch gekennzeichnet, daß** der wenigstens eine Informationsstrom aus der Gruppe gewählt wird, die durch einen Videoinformationsstrom (V), einen Audioinformationsstrom (A) und einen Dateninformationsstrom (D) gebildet wird.

4. Verfahren nach einem der vorhergehenden Ansprüche, **dadurch gekennzeichnet, daß** die Zugriffseinheiten (Vtn, Atn, Dtn) paarweise unterschiedliche Informationsströme betreffen.

5. Verfahren nach einem der vorhergehenden Ansprüche, **dadurch gekennzeichnet, daß** die zweite Gruppe von Feldern (HG) des Headers (H) wenigstens ein Feld gewählt aus der Gruppe umfaßt, welche durch die folgenden Felder gebildet wird:
- Identifizierung des Übertragungskanals (CH),
- Länge des Datenpaketes (L),
- Prüfung (Prüfsumme - CK).

6. Verfahren nach einem der Ansprüche 1 bis 4, **dadurch gekennzeichnet, daß** die zweite Gruppe von Feldern (HG) des Headers (H) ferner die folgenden Felder umfaßt:
- Identifizierung des Übertragungskanals (CH),
- Länge des Datenpaketes (L),
- Prüfung (Prüfsumme - CK).

7. Verfahren nach Anspruch 5 oder 6, **dadurch gekennzeichnet, daß** das Identifizierungsfeld des Übertragungskanals (CH) innerhalb des Headers (H) an einer Position steht, welche der ersten Gruppe von Feldern (HS) vorangeht.

8. Verfahren nach einem der Ansprüche 5 bis 7, **dadurch gekennzeichnet, daß** das Prüfungsfeld (CK) Daten betrifft, die sowohl in der ersten Gruppe (HS) als auch der zweiten Gruppe (HG) von Feldern des Headers (H) enthalten sind.

9. Verfahren nach einem der Ansprüche 5 bis 7, **dadurch gekennzeichnet, daß** das Prüfungsfeld (CK) Daten betrifft, die, bis auf das Prüfungsfeld (CK) selbst, sowohl in der ersten Gruppe (HS) als auch in der zweiten Gruppe (HG) von Feldern des Headers (H) enthalten sind.

10. Verfahren nach einem der Ansprüche 5 bis 9, **dadurch gekennzeichnet, daß** das Prüfungsfeld (CK) ein Prüfsummenfeld zur Paritätsprüfung ist.

11. Verfahren nach einem der Ansprüche 1 bis 10, **dadurch gekennzeichnet, daß** die erste Gruppe (HS) von Feldern des Headers (H) ein Zeitstempelfeld (TS) umfaßt.

12. Übertragungssystem, welches Einrichtungen zum Durchführen der Schritte aus einem der Verfahrensansprüche 1 bis 11 umfaßt.

13. Sender für ein Übertragungssystem, welches nach dem in einem der Ansprüche 1 bis 11 beanspruchten Verfahren arbeitet, **dadurch gekennzeichnet, daß** der Sender umfaßt:
- einen Multiplexer (M) zum Erzeugen des Informationsstromes ausgehend von den Zugriffseinheiten (Vtn, Atn, Dtn), und
- ein Splittermodul (S) zum Verteilen des Informationsstromes auf die mehreren Telefonleitungen (Cⱼ).

14. Computererzeugnis, welches dazu eingerichtet ist, in den Speicher eines Rechners geladen zu werden, welches Abschnitte von Softwarecode zum Implementieren des in einem der Ansprüche 1 bis 11 beanspruchten Verfahrens umfaßt, wenn das Erzeugnis auf einem Rechner zum Laufen gebracht wird.

## Revendications

1. Procédé de transmission sur une pluralité de lignes téléphoniques (Cj) d'au moins un flux d'informations (V, A, D) assemblé en unités d'accès (Vtn, Atn, Dtn) avec les méta-informations respectives associées, dans lequel pour la transmission sur ladite pluralité de lignes téléphoniques (Cj) ledit au moins un flux d'informations (V, A, D) est disposé en paquets, chaque paquet comprenant au moins un segment de l'une desdites unités d'accès (Vtn, Atn, Dtn) dudit au moins un flux d'informations (V, A, D) et un en-tête (H) ; ledit en-tête (H) comprenant :
- une première série de champs (HS), qui représente la méta-information associée audit au moins un segment de ladite unité d'accès (Vtn, Atn, Dtn) dudit au moins un flux d'informations (V, A, D), et
- une seconde série de champs (HG) pour permettre la subdivision de l'au moins un flux d'informations sur la pluralité de lignes téléphoniques (Cj), dans lequel ladite seconde série de champs (HG) comprend des champs de validité généraux, indépendants dudit au moins un flux d'informations (V, A, D) et comprenant au moins un champ de numéro de paquet (PN) comprenant le numéro du paquet dans l'ordre d'envoi en transmission
et dans lequel
(i) la taille maximale desdits paquets est contrôlée et
(ii) lesdits paquets sont distribués (S) sur lesdites lignes téléphoniques
de façon à respecter une distribution homogène de la charge entre les différentes lignes téléphoniques (Cj).

2. Procédé selon la revendication 1, **caractérisé en ce que** lesdites unités d'accès (Vtn, Atn, Dtn) ont une taille variable.

3. Procédé selon la revendication 1 ou la revendication 2, **caractérisé en ce que** ledit au moins un flux d'informations est sélectionné à l'intérieur du groupe composé d'un flux d'informations vidéo (V), d'un flux d'informations audio (A), et d'un flux d'informations de données (D).

4. Procédé selon l'une quelconque des revendications précédentes, **caractérisé en ce que** lesdites unités d'accès (Vtn, Atn, Dtn) concernent mutuellement différents flux d'informations.

5. Procédé selon l'une quelconque des revendications précédentes, **caractérisé en ce que** ladite seconde série (HG) de champs dudit en-tête (H) comprend au moins un champ sélectionné à l'intérieur du groupe composé des champs suivants :
- identifiant du canal de transmission (CH),
- longueur du paquet de données (L),
- contrôle (somme de contrôle - CK).

6. Procédé selon les revendications 1 à 4 **caractérisé en ce que** ladite seconde série (HG) de champs dudit en-tête (H) comprend en outre tous les champs suivants
- identifiant du canal de transmission (CH),
- longueur du paquet de données (L),
- contrôle (somme de contrôle - CK).

7. Procédé selon la revendication 5 ou la revendication 6, **caractérisé en ce que** ledit champ d'identifiant du canal de transmission (CH) est situé, à l'intérieur dudit en-tête (H), dans une position précédent ladite première série de champs (HS).

8. Procédé selon l'une quelconque des revendications 5 à 7, **caractérisé en ce que** ledit champ de contrôle (CK) concerne des données comprises à la fois dans ladite première série (HS) et dans ladite seconde série (HG) de champs dudit entête (H).

9. Procédé selon l'une quelconque des revendications 5 à 7, **caractérisé en ce que** ledit champ de contrôle (CK) concerne des données comprises à la fois dans ladite première série (HS) et dans ladite seconde série (HG) de champs dudit entête (H) excepté le champ de contrôle (CK) lui-même.

10. Procédé selon l'une quelconque des revendications 5 à 9, **caractérisé en ce que** ledit champ de contrôle (CK) est un contrôle de parité ou un champ de somme de contrôle.

11. Procédé selon l'une quelconque des revendications 1 à 10, **caractérisé en ce que** ladite première série (HS) de champs dudit en-tête (H) comprend un champ d'horodateur (TS).

12. Système de transmission comprenant des moyens pour mettre en oeuvre les étapes de l'une quelconque des revendications 1 à 11 du procédé.

13. Transmetteur pour un système de transmission fonctionnant avec le procédé selon l'une quelconque des revendications 1 à 11, **caractérisé en ce qu'**il comprend :
- un multiplexeur (M) pour générer ledit flux d'informations commençant par lesdites unités d'accès (Vtn, Atn, Dtn), et
- un module séparateur (S) pour distribuer ledit flux d'informations sur ladite pluralité de lignes téléphoniques (Cj).

14. Produit informatique pouvant être chargé dans la mémoire d'un ordinateur, comprenant des parties de code de logiciel pour mettre en oeuvre le procédé selon l'une quelconque des revendications 1 à 11 lorsque ledit produit est conçu pour fonctionner sur un ordinateur.
